Europäisches Patentamt

(19) European Patent Office

Office européen des brevets

(11) Publication number: **0 194 050**
**B1**

# EUROPEAN PATENT SPECIFICATION

(45) Date of publication of the patent specification:
16.08.89

(51) Int. Cl.⁴: **B 23 K 9/04**

(21) Application number: **86300900.7**

(22) Date of filing: **11.02.86**

(54) A welding apparatus and method for depositing wear surfacing material on a substrate.

(30) Priority: **12.02.85 US 700972**

(43) Date of publication of application:
**10.09.86 Bulletin 86/37**

(45) Publication of the grant of the patent:
**16.08.89 Bulletin 89/33**

(84) Designated Contracting States:
**AT BE CH DE FR GB IT LI LU NL SE**

(56) References cited:
**GB-A- 1 380 098**
**US-A- 4 472 619**

(73) Proprietor: **METALLURGICAL INDUSTRIES, INC., One Coldstream Way, Tinton Falls New Jersey 07724 (US)**

(72) Inventor: **Shubert, Gary Charles, 102 Coventry Drive, Lakewood New Jersey 08701 (US)**

(74) Representative: **Jones, Michael Raymond et al, HASELTINE LAKE & CO. Hazlitt House 28 Southampton Buildings Chancery Lane, London WC2A 1AT (GB)**

## Description

This invention relates to a welding apparatus and method for depositing a wear surfacing material on a metallic substrate. More particularly, this invention relates to a method and apparatus for depositing a weld bead deposit on a narrow surface of a metallic substrate.

Heretofore, various types of welding techniques have been known for applying wear surfacing material onto a metallic substrate. For example, U.S. Patents 3803380 and 4122327 describe techniques of using a plasma-flame burner for depositing a flow of powdered metal onto a substrate. Further, in some cases, such as described in U.S. 4142089, it has been known to use a pulsed mode of arc heating in a plasma gun sprayer for applying a coating of powdered material onto a substrate. In still other cases, for example as described in U.S. Patent 3781508 it has been known to use a pulsed weld current with a transferred arc in order to form a coating from a consumable electrode.

It has also been known from U.S. Patents 4125754 and 4472619 to form a hard surface on a substrate using a plasma transferred arc. In these cases, melting and fusion of an overlay material has been accomplished by providing a relatively constant electric current to the substrate in order to create a molten zone or puddle into which the overlay powder could be introduced. The powder, or at least one component of the powder, would then become molten and an integral part of the molten zone, adding to the volume of the previously established puddle. The heat source would continually move across the substrate and this process would be conducted continually until a weld of the desired length was achieved. Typical weld current variations, however, are limited to a gradual increase of the weld current at the beginning of the weld from some start level to the main welding level to some final level.

Of note, controlled arc welding techniques have also been known to use a pulsating arc current to form a deposit from an electrode such as described in U.S. Patents 3449544; 3521027; 3622744; 3666906 and 3683149.

In the case of substrates or workpieces which have relatively narrow edges, it has been difficult to obtain a suitable bead deposit. For example, the deposits which have been obtained have generally had a thickness for a single pass in the range of from 0.51 mm (0.020 inch) to 6.4 mm (0.250 inch) and a width down to 1.6 mm (0.0625 inch). Generally, the known processes have been unable to deposit upon substrate widths of 2.5 mm (0.100 inch) and less without significant melting of the substrate or the use of elaborate chilling devices. With deposit widths of less than 3.2 mm (0.125 inch), a ratio of substrate width to a deposit width of 2.5 to 1 is typically maintained in order to provide a suitable base for the hardfacing material and a satisfactory heat sink to prevent the hardfacing material from excessively mixing or diluting with the substrate material and from spilling off the edges. In this regard, the deposit widths of less than 1.9 mm (0.075 inch) are considered unsuitable for these processes.

Accordingly, it is an object of the invention to obtain a very precise control over the bead deposit geometry of a deposited weld bead.

It is another object of the invention to lay down a bead deposit on a substrate having a narrow width.

It is another object of the invention to lay down a bead deposit on a substrate with a minimum of dilution of the substrate.

It is another object of the invention to provide a process of forming a weld bead on a substrate material which is accompanied with reduced melting and flow of the substrate material.

It is another object of the invention to establish a method whereby overlay deposits may be applied to substrates of narrow widths using powdered metals and alloys, refractory hard carbides or the like, or mixtures of these as overlay materials.

It is another object of the invention to provide a method whereby overlay deposits on narrow section substrates can be built up to provide a large height to width deposit.

Briefly, the invention provides a welding apparatus and method for depositing wear surfacing material on a metallic substrate, and particularly on very narrow surfaces of a substrate by use of a plasma transferred arc technique coupled with pulsing of the transferred arc to lay down powder metal into a bead deposit.

The apparatus includes a welding torch, a nonconsumable electrode, a powdered metal delivery device, a pilot arc welding power source, a main arc power source and a pulse control device.

The welding torch is constructed with a central or first passage for receiving the non-consumable electrode and a flow of inert gas, a second passage concentric to and about the central passage for receiving a flow of powdered metal and a third passage concentric to and about the second passage for receiving a flow of shielding gas. At one end of the first passage is a restricting orifice.

The pilot arc welding power source is connected to and between the electrode and the restricting orifice in order to establish an electric arc therebetween. The main arc power source is connected to and between the electrode and the substrate to establish an electric arc therebetween as well as a plasma plume of the flow of inert gas between the electrode and the substrate. The powdered metal delivery device supplies powdered metal to the second passage of the torch.

The pulse control device is connected to the main arc power source for pulsing the power source in order to control the amplitude and duration of the power supplied from the main arc power source. The control device serves to pulse the current between a main current level and a lower auxiliary current level on a periodic basis. The main current level or amplitude is provided to create a weld puddle on the substrate and to fuse the powdered metal. The auxiliary current level or amplitude is provided to allow the previously created puddle to solidify thus creating a series of overlapping weld deposits. Variations in the current amplitude as well as the amplitude duration provide a very precise control over the weld deposit geometry and reduced heat input to the base material. This permits the creation of usable hardfacing deposits on substrates with narrow section widths.

The method provided by the invention comprises the steps of establishing a transferred arc between a non-consumable electrode and a narrow surface of a workpiece, forming a plasma plume of inert gas in the arc, feeding a flow of powdered metal into the plasma plume while moving the electrode along the workpiece for depositing the powdered metal along the narrow surface of the workpiece and pulsing the welding current to the electrode and workpiece between a main current level and a lower auxiliary current level during movement of the electrode in order to effect a series of overlapping weld deposits along the narrow surface of the workpiece.

The bead deposit which is formed by the overlapping deposits may have a thickness of from 0.25 mm (0.010 inch) to 3.2 mm (0.125 inch) for a single pass as well as a width of from 0.51 mm (0.020 inch) to 3.2 mm (0.125 inch). Further, the ratio of bead height to bead width may be in the range of from 0.5:1 to 2:1 for a single pass. Still further, the ratio of substrate width to deposit width may vary from 0.5 to 1.0.

With pulsed arc welding currents, the molten zone formed on the substrate is constantly being created, growing in size, shrinking in size and solidifying completely. By adding overlay material at the appropriate time, the major portion of the heat input supplied by the welding torch can be utilized to melt the powder and only minimum amounts of this heat are directed into the substrate material. This reduces melting and flow of the substrate material.

On deposits where multiple layers are required, the previous overlay becomes the substrate. Minimum melting of the substrate occurs and the overlay material can be built up layer by layer to the desired height.

An added benefit of this technique is that due to the very efficient use of welding heat input, the weld deposits solidify very rapidly. Also, finer grain structures have been observed in many evaluated alloys utilizing this technique than in these alloys deposited using typical PTA methods.

These and other objects and advantages of the invention will become more apparent from the detailed description taken in conjunction with the accompanying drawings wherein:

Fig. 1 illustrates a schematic view of a welding apparatus in accordance with the invention;

Fig. 2 illustrates a current verses time graph of a known welding technique; and

Fig. 3 illustrates a current verses time graph of a method in accordance with the invention.

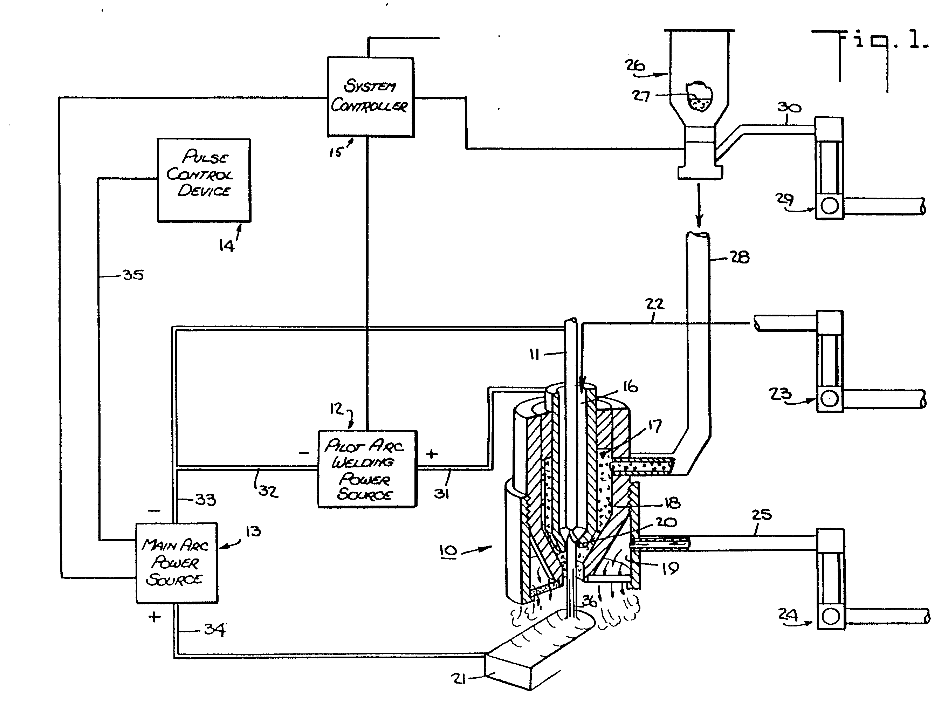

Referring to Fig. 1, the welding apparatus includes a torch 10, a non-consumable electrode 11, a pilot arc welding power source 12, a main arc power source 13, a pulse control device 14 and a system controller 15.

The torch 10 is of generally conventional construction and includes a first central passage 16 for receiving the electrode 11, a second passage 17 concentric to and about the first passage 16 for receiving a flow of powdered metal 18 and a third passage 19 concentric to and about the second passage for receiving a flow of shielding gas. In addition, the torch 10 has a restricting orifice 20 at the end of the central chamber 16 through which a flow of inert gas is directed towards a workpiece or substrate 21.

As indicated in Fig. 1, a gas line 22 is connected to the central chamber 16 of the torch in order to deliver an inert gas, such as argon, thereto. The gas line 22 is, in turn, connected to a gas flow control and metering device 23 which has an inlet gas line connected to a suitable inert gas source (not shown). This device 23 serves to control and meter the amount of inert gas delivered into the central chamber 16 of the torch 10.

In like manner, a flow control and metering device 24 is connected via a gas line 25 to the outer chamber 19 of the torch 10 in order to deliver a shielding gas, such as argon, thereto from a suitable shielding gas source (not shown).

Still further, a powdered metal delivery device 26 which contains a reservoir of powdered metal material 27 is connected via a supply line 28 to the chamber 17 of the torch 10 in order to supply powdered metal thereto. In addition, a flow control and metering device 29 is connected via a gas line 30 to the powdered metal delivery device 26 in order to convey an inert gas into the supply line 28 from a suitable source (not shown) in order to aid the conveyance of the powdered metal. The gas delivered to the delivery device 26 is used to assist gravity in transporting the powdered metal to and through the torch 10 while also protecting the powdered metal from atmospheric contamination. This gas also adds to the overall gas volume and composition at the weld zone.

The pilot arc welding power source 12 is connected to and between the electrode 11 and the restricting orifice 20 by suitable cables 31, 32, respectively, and internal connections (not shown) within the torch 10. The pilot arc welding power source 12 provides the welding current necessary to establish an electric arc between the electrode 11 and the restricting orifice 20. As indicated, the electrode 11 is connected to the negative terminal of the power source 12 while the restricting orifice 20 of the torch 10 is connected to the positive terminal of the power source 12.

The main arc power source 12 is connected to and between the electrode 11 and the substrate 21 in order to provide the welding current to establish an arc between the electrode 11 and the substrate 21. As indicated, the main arc power source 13 is connected to the electrode 11 and substrate 21 via suitable cables 33, 34 respectively. As indicated, the electrode is connected to the negative terminal of the power source 13 while the substrate 21 is connected to the positive terminal of the power source 13.

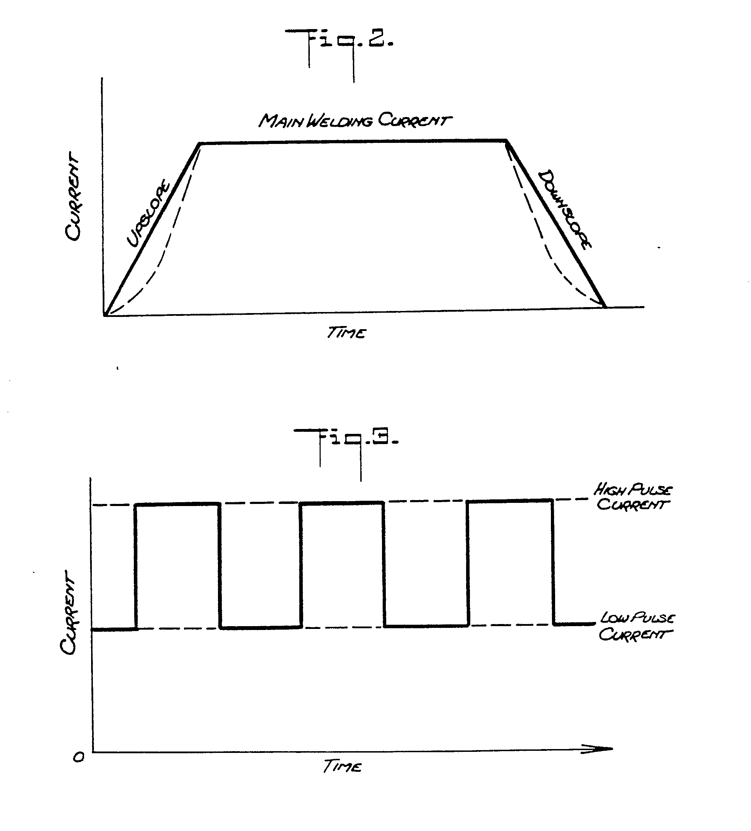

The pulse control device 14 is connected to the main arc power source 13 via a suitable cable 35 in order to control the amplitude and duration of the power supplied from the main arc power source 13 to the electrode 11 and substrate 21. In this respect, the pulse control device 14 operates so that the current is delivered between a main current level (i. e. a high pulse current) as indicated in Fig. 3 and a lower auxiliary level (i. e. a low pulse current) with each over a programmed duration of time.

The system controller 15 is connected to the respective power sources 12, 13, the powdered metal delivery device 26 and the various flow control and metering devices 23, 24, 29 in order to synchronize the operation of these components.

In operation, with powdered metal material being supplied from the delivery device 26 to the torch 10 and with gas being directed to the passages 16, 19, the power sources 12, 13 are activated so that a transferred arc is established between the electrode 11 and substrate 21. At the same time, a plasma plume 36 of the inert gas supply through the passage 16 is formed between the electrode 11 and substrate 21. The delivered powdered metal is fed into this plume and transferred in molten form onto the substrate 21 to form a weld bead. The delivery of the powdered material is precisely metered by the device 26 while the gas delivered from the outer passage 19 shields the weld zone from atmospheric contamination while adding to the overall gas volume and composition at the weld zone. As the torch 10 and electrode 11 are moved along the length of the substrate 21, the pulse control device 14 is actuated via the controller 15 so that the welding current to the electrode 11 and substrate 21 is pulsed between the main current level and lower auxiliary level as indicated in Fig. 3. During the time of the higher main current level, a weld puddle is formed on the substrate and the consumable powdered material which is delivered into the puddle is fused in place. With the succeeding auxiliary current level occurring, the previously created puddle is allowed to solidify into a weld deposit. As the torch 10 and electrode 11 move along the substrate 21, a series of overlapping weld deposits occurs so that the resulting bead deposit is characterized in being formed of a series of overlapping weld deposits.

Referring to Fig. 2, by way of comparison, previously known techniques for using a transferred arc to coat a substrate employed a substantially constant welding current so that a continuous bead of material was formed on the substrate. Typically, weld current variations were limited to a gradual increase of the weld current at the beginning of the weld from some start level to the main welding level and thereafter reduced from the main welding level to some final level as indicated.

The bead deposits which are obtained on the substrate can have very narrow widths. Further, the substrate onto which the bead is deposited may also have rather narrow widths. For example, the bead deposit thickness for a single pass may range from 0.25 mm (0.010 inch) to 3.2 mm (0.125 inch) with a width range of from 0.51 mm (0.020 inch) to 3.2 mm (0.125 inch).

Of note, the welding method allows the depositing of the powdered metal material on very narrow widths of substrate without significant melting of the substrate. Thus, elaborate chilling devices for the substrate are unnecessary particularly where the bead deposit width is of from 3.2 mm (0.125 inch) to 0.89 mm (0.035 inch).

Typically, a ratio of substrate width to deposit width of from 1:1 is maintained. For deposits of a width of from 0.89 mm (0.035 inch) to 1.8 mm (0.070 inch), the ratio may increase to 1:2. The height to width ratio of the weld deposit for a single pass can be precisely controlled, for example in ranges of from 0.5:1 to 2:1.

The invention thus provides a technique which can be used to deposit a wide variety of metals, metal alloys or mixtures of the metals and metal alloys along or with additions of refractory hard materials such as carbides. Of note, iron-, nickel- and cobalt- base alloys have been deposited. For example, these have included stainless steels, high chromium irons, tool steels, cobalt-chromium-tungsten alloys and nickel-chromium-silicon-boron alloys. In addition, mixtures of several of these materials with a carbide addition, e. g. tungsten carbide, titanium carbide and vanadium-tungsten carbide have also been deposited. This flexibility in material selection is a major characteristic of the pulse transferred arc technique that is not enjoyed by previously known processes that use other than powder consumables.

The invention further provides a technique by which very precise control over the hardfacing deposit bead geometry can be maintained.

Further, the invention provides a technique of forming a bead deposit on a substrate of rather narrow width a minimum of dilution and with a minimum of heat.

The following tables indicates various examples of typical welding parameters which were followed in laying down a bead on a metallic substrate.

Typical Welding Parameters

Equipment: PSM-2 weld surfacing machine with a Hobart CYBER-TIG-300 AC/DC arc welder (power supply) with a 300 series programmer.

|  | Example 1 | Example 2 | Example 3 |
|---|---|---|---|
| Deposit Material | S-6 | M-2 | VWC in a 430 Stainless steel Matrix |
| Substrate Geometry | 1.6 mm (0.062") wide edge | 12.7 mm (0.50") diameter bar | 1.5 mm (0.059") wide edge |
| Substrate Alloy | AISI 304 stainless steel | SAE 4130 (0.1875" (4.8 mm) wide deposit) | AISI 301 stainless steel |
| Current (amps) | 20 | 40 | 12 |
| Volts | 20 | 20 | 20 |
| Powder Feed Rate | 8.4 gm/min | 4.5 gm/min | 5.8 gm/min |
| Powder Mesh Size | 60/325 | 140/325 | 140/325 |
| Travel Speed | 3.5 mm/sec (8.3 in/min) | 2.3 mm/sec (5.5 in/min) | 3.3 mm/sec (7.8 in/min) |
| Powder Gas Rate | $5.5 \times 10^{-5}$ m$^3$/s (7 scfh*) | $5.5 \times 10^{-5}$ m$^3$/s (7 scfh) | $5.5 \times 10^{-5}$ m$^3$/s (7 scfh) |
| Shield Gas | $3.9 \times 10^{-4}$ m$^3$/s (50 scfh) | $3.9 \times 10^{-4}$ m$^3$/s (50 scfh) | $3.9 \times 10^{-4}$ m$^3$/s (50 scfh) |
| Center Gas | $2.4 \times 10^{-5}$ m$^3$/s (3 scfh) | $2.4 \times 10^{-5}$ m$^3$/s (3 scfh) | $2.4 \times 10^{-5}$ m$^3$/s (3 scfh) |
| Programmer Drawer Settings (unless otherwise indicated): |  |  |  |
| Hot Start | 0 | 0 | 0 |
| Upslope | 1 | 1 | 1 |
| Initial Current | 1/2 | 1/2 | 1/2 |
| Pulsation Start Delay | 0 | 0 | 0 |
| High Pulse Time (seconds) | 0.4 | 0.4 | 0.4 |
| Weld Current | 170 | 170 | 170 |
| % Weld Current | 0 | 0 | 0 |
| Low Pulse Time (seconds | 1.2 | 1.2 | 1.2 |
| Down Slope Rate | 2 | 2 | 2 |
| Post Heat Time | 2 | 2 | 2 |
| Final Current | 0 | 0 | 0 |
| Weld Bead Configuration: |  |  |  |
| Bead Height (Single Pass) | 0.79 mm (0.031 in.) | 0.64 mm (0.025 in.) | 0.64 mm (0.025 in.) |
| Height to Width Ratio (Single Pass) | 1 to 2 | 1 to 7 | 0.5 to 1 |

* scfh: standard cubic feet per hour.

Of note, a PSM-2 weld surfacing machine is a machine sold by Union Carbide Corp., Linde Division. In the above example, the CE501 standard power supply was replaced by a Hobart CT-300 AC/DC arc welder power supply as sold by Hobart Brothers Co. of Troy, Ohio. In addition, a 300 series programmer of this Hobart arc welder was used as the pulse control device.

The wearsurfacing materials tested have included:
S-6 (Co-Cr-W-C)
F-90 (Fe-Cr-C)
Metco 31-C (WC,Co + Ni base alloy)
GS 131 (W$_2$C + Ni base alloy)
N-50 (Ni-Cr-Si-B)
W-516 (W$_2$C + Co base alloy)
M-2 (Tool Steel)
WC/Co
(V,W)C

Deposits were made on the following substrate materials
1020 Steel
Cast Iron
304 Stainless Steel
High Speed Steel
301 Stainless Steel
4130 Steel

Of note, the current ranges could possibly vary from 1–2 amps for the low pulse current to several hundred amps for the high pulse current. The time could also vary from 0.1 seconds or less for the high pulse time to 3 or more seconds for the low pulse time. These adjustments to the welding conditions are the primary controls which allow the weld bead size and shape to be customized. In experiments to date, the amperage levels for low pulse currents have been from 4–15 amps and high pulse current from 20–70 amps. The high pulse and low pulse times being from 0.3–0.6 and 1–1.4 seconds, respectively.

Further, the term «SCFH» is an acronym for Standard Cubic Feet per hour. The standard refers to a set of conditions for measurements which are: 70° F, 29.92" Hg atmos and the measured gas in a dry condition.

**Claims**

1. A welding apparatus for depositing wear surfacing material on a metallic substrate (21), said apparatus comprising: a welding torch (10) having a first passage (16) for receiving a first flow of inert gas, a second passage (17) concentric to and about said first passage (16) for receiving a flow of powdered metal (18), a third passage (19) concentric to and about said second passage (17) for receiving a flow of shielding gas, and a restricting orifice (20) at an end of said first passage (16), a non-consumable electrode (11) in said first passage (16), a powdered metal delivery device (26) for supplying powdered metal to said second passage (17) of said torch, a pilot arc welding power source (12) connected to and between said electrode (11) and said restricting orifice (20) to establish an electric arc therebetween, and a main arc power source (13) connected to and between said electrode (11) and the substrate (21) to establish a transferred electric arc therebetween and a plasma plume (36) of the first flow of inert gas between said electrode (11) and the substrate (21), characterized in having a pulse control device (14) connected to said main arc power source (13) for pulsing said main arc power source (13) to control the amplitude and duration of the power supplied from said main arc power source (13).

2. A welding apparatus as set forth in claim 1 further characterized in having a powdered metal delivery device (26) for supplying powdered metal to said second passage (17) of said torch and a controller (15) connected to each of said delivery device (25) pilot arc welding power source (12) and main arc power source (13) for synchronizing operation thereof.

3. A method of forming a wear surface on a metallic workpiece, said method comprising the steps of: establishing a transferred arc between a non-consumable electrode and a narrow surface of a workpiece; establishing a plasma plume of inert gas in the arc; and feeding a flow of powdered metal into the plasma plume while moving the electrode along the workpiece for depositing the powdered metal along the narrow surface of the workpiece and characterized in pulsing the welding current to the electrode and workpiece between a main current level and a lower auxiliary current level during movement of the electrode along the workpiece to effect a series of overlapping weld deposits along the narrow surface of the workpiece.

4. A method as set forth in claim 3 characterized in that the series of overlapping weld deposits form a bead deposit.

5. A method as set forth in claim 4 characterized in that the bead deposit has a thickness of from 0.25 mm (0.010 inch) to 3.2 mm (0.125 inch) for a single pass.

6. A method as set forth in claim 4 or 5 characterized in that the bead deposit has a width of from 0.51 mm (0.020 inch) to 3.2 mm (0.125 inch).

7. A method as set forth in any one of claims 4, 5 or 6 characterized in that the bead deposit has a width relative to the width of the narrow surface of the workpiece of from 1:1 to 2:1.

8. A method as set forth in any one of claims 4, 5, or 6 characterized in that the bead deposit has a ratio of bead height to bead width of from 0.5:1 to 2:1 for a single pass.

9. A method as set forth in claim 3 characterised in that said main current level is in the range of from 20 to 70 amps and said auxiliary current level is in the range of from 4 to 15 amps.

10. A method as set forth in claim 9 further characterised in that said main current level is pulsed for a time of from 0.3 to 0.6 seconds and said auxiliary current level is pulsed for a time of from 1 to 1.4 seconds.

11. A method as set forth in claim 3 further characterised in that said auxiliary current level is 1 to 2 amps.

12. A method as set forth in claim 1 further characterised in that said main current level is pulsed for a time of from 0.1 seconds or less and said auxiliary current level is pulsed for a time of from 3 or more seconds.

13. A method as set forth in any one of claims 3 or 12 further characterised in that said narrow surface is not greater than 3.2 mm.

**Patentansprüche**

1. Schweißgerät zum Auftragen eines Verschleißoberflächen-Schutzmaterials auf einem metallischen Substrat (21), wobei das Gerät besteht aus einem Schweißbrenner (10) mit einer ersten Durchführung (16) zur Durchleitung eines ersten Stromes aus Inertgas, einer zweiten Durchführung (17), die zur ersten Durchführung (16) konzentrisch und um diese angeordnet ist und zur Durchleitung eines zweiten Stromes aus pulverförmigem Material (18) dient, einer dritten Durchführung (19), die zur zweiten Durchführung (17) konzentrisch und um diese angeordnet ist und zur Durchleitung eines Stromes aus Schutzgas dient, und einer sich verjüngenden Öffnung (20) am Ende der ersten Durchführung (16), einer nicht-abschmelzbaren Elektrode (11) in besagter erster Durchführung (16), einer Metallpulverzuführung (26) zur Zuführung pulverförmigen Metalls zu besagter zweiter Durchführung (17) des besagten Brenners, einer Startlichtbogen-Schweißspannungsquelle (12), die an und zwischen besagter Elektrode (11) und der sich verjüngenden Öffnung (20) angeschlossen ist, um dazwischen einen elektrischen Lichtbogen zu zünden, und einer Hauptlichtbogen-Schweißspannungsquelle (13), die an und zwischen besagter Elektrode (11) und dem Substrat (21) angeschlossen ist, um einen übertragenen elektrischen Lichtbogen dazwischen und einer Plasmafahne (36) des ersten Stromes aus Inertgas zwischen besagter Elektrode (11) und dem Substrat (21) zu bilden, gekennzeichnet durch eine Impulssteuervorrichtung (14), die an besagte Hauptlichtbogen-Schweißspannungsquelle (13) angeschlossen ist zur Impulssteuerung der Hauptlichtbogen-Schweißspannungsquelle (13), um die Amplitude und die Dauer der Spannung zu steuern, die von besagter Hauptlichtbogen-Schweißspannungsquelle (13) geliefert wird.

2. Schweißgerät nach Patentanspruch 1, gekennzeichnet durch eine Metallpulverzuführvorrichtung (26) zur Zuführung pulverförmigen Metalls zu besagter zweiter Durchführung (17) des besagten Brenners und einem Steuergerät (15), das sowohl an die Startlichtbogen-Schweißspannungsquelle (12) als auch an die Hauptlichtbogen-Schweißspannungsquelle (13) angeschlossen ist, um deren Betrieb zu synchronisieren.

3. Verfahren zum Ausbilden einer Verschleißoberfläche auf einem metallischen Werkstück, wobei das Verfahren folgende Schritte umfaßt: Zünden eines übertragenen Lichtbogens zwischen einer nicht-abschmelzbaren Elektrode und einer schmalen Oberfläche eines Werkstücks; Bildung einer Plasmafahne aus inertem Gas im Lichtbogen; Zuführung eines Stromes pulverförmigen Metalls in die Plasmafahne während die Elektrode längs der schmalen Oberfläche des Werkstückes bewegt wird, und gekennzeichnet durch eine impulsförmige Steuerung des Schweißstromes zur Elektrode und dem Werkstück zwischen einem Hauptstromniveau und einem niedrigeren Hilfsstromniveau während des Bewegens der Elektrode längs des Werkstückes zum Aufbringen einer Anzahl überlappender Schweißaufträge längs der schmalen Oberfläche des Werkstückes.

4. Verfahren nach Patentanspruch 3, dadurch gekennzeichnet, daß die Anzahl überlappender Schweißaufträge eine zusammenhängende Raupe bildet.

5. Verfahren nach Patentanspruch 4, dadurch gekennzeichnet, daß die Raupe für eine Lage eine Dicke von 0,25 mm (0,010 Zoll) bis 3,2 mm (0,125 Zoll) aufweist.

6. Verfahren nach Patentanspruch 4 oder 5, dadurch gekennzeichnet, daß die Raupe eine Breite von 0,51 mm (0,020 Zoll) bis 3,2 mm (0,125 Zoll) aufweist.

7. Verfahren nach einem der Patentansprüche 4, 5 oder 6, dadurch gekennzeichnet, daß die Raupe eine Relativbreite zur Breite der schmalen Oberfläche des Werkstückes 1:1 bis 2:1 aufweist.

8. Verfahren nach einem der Patentansprüche 4, 5 oder 6, dadurch gekennzeichnet, daß die Raupe ein Verhältnis von Raupenhöhe zur Raupenbreite von 0,5:1 bis 2:1 für eine Lage aufweist.

9. Verfahren nach Patentanspruch 3, dadurch gekennzeichnet, daß besagtes Hauptstromniveau im Bereich 20 bis 70 A und besagtes Hilfsstromniveau im Bereich 4 bis 15 A liegt.

10. Verfahren nach Patentanspruch 9, weiters dadurch gekennzeichnet, daß besagtes Hauptstromniveau während einer Impulsdauer von 0,3 bis 0,6 Sekunden und besagtes Hilfsstromniveau während einer Impulsdauer von 1 bis 1,4 Sekunden aufrechterhalten wird.

11. Verfahren nach Patentanspruch 3, dadurch gekennzeichnet, daß besagtes Hilfsstromniveau 1 bis 2 A beträgt.

12. Verfahren nach Patentanspruch 1, weiters dadurch gekennzeichnet, daß besagtes Hauptstromniveau während einer Impulsdauer von 0,1 Sekunden und besagtes Hilfsstromniveau während einer Impulsdauer von 3 oder mehr Sekunden aufrechterhalten wird.

13. Verfahren nach einem der Patentansprüche 3 bis 12, weiters dadurch gekennzeichnet, daß besagte schmale Oberfläche nicht breiter als 3,2 mm ist.

**Revendications**

1. Appareil de soudage pour déposer un revêtement de matériau antiusure sur un substrat métallique (21), ledit appareil comprenant: un chalumeau de soudage (10) ayant un premier passage (16) pour recevoir un premier flux de gaz inerte, un second passage (17) concentrique par rapport au premier et entourant celui-ci pour recevoir un flux de métal en poudre (18), un troisième passage (19) concentrique par rapport au second passage (17) et entourant celui-ci pour recevoir un flux de gaz protecteur, un orifice à étranglement (20) à une extrémité du premier passage (16), une électrode non consommable (11) dans le premier passage, un dispositif d'alimentation en poudre de métal (26) pour amener de la poudre de métal au second passage (17) du chalumeau, une alimentation en courant de l'arc de soudage pilote (12) connectée à l'électrode (11) et à l'orifice à étranglement (20) pour établir un arc électrique entre eux, une alimentation en courant de l'arc principal (13) connectée à l'électrode (11) et au substrat (21) pour établir un arc électrique de plasma entre eux et un panache de plasma du premier flux de gaz inerte (36) entre l'électrode (11) et le substrat (21), caractérisé en ce qu'il comporte un dispositif de contrôle des impulsions (14), connecté à l'alimentation de l'arc principal (13), pour créer des impulsions au niveau de l'alimentation en courant de l'arc principal (13) et contrôler l'amplitude et la durée des impulsion de courant fournies par l'alimentation de l'arc principal (13).

2. Appareil à souder décrit dans la revendication 1, caractérisé en outre en ce qu'il comporte un dispositif pour alimenter en poudre de métal (26) le second passage (17) du chalumeau et un contrôleur (15) connecté au dispositif d'alimentation (26), à l'alimentation de l'arc de soudage pilote (12) et à l'alimentation de l'arc principal (13), afin d'assurer leur fonctionnement synchronisé.

3. Méthode pour former une surface antiusure sur une pièce métallique, cette méthode comprenant les étapes consistant à établir un arc de plasma entre une électrode non consommable et une surface étroite d'une pièce; à former un panache de plasma de gaz inerte dans l'arc; à amener un flux de poudre de métal dans le panache de plasma tout en déplaçant l'électrode le long de la pièce pour déposer le métal en poudre le long de la surface étroite de la pièce, la méthode étant caractérisée en ce que le courant de soudage entre l'électrode et la pièce est pulsé entre un niveau de courant principal et un niveau de courant auxiliaire plus bas pendant le mouvement de l'électrode le long de la pièce, afin de réaliser des dépôts de soudage successifs se chevauchant le long de la surface étroite de la pièce.

4. Méthode selon la revendication 3, caractérisée en ce qu'une série de dépôts de soudages se chevauchent pour former un cordon.

5. Méthode selon la revendication 4, caractérisée en ce que le dépôt formant le cordon a une épaisseur située entre 0,25 mm (0,010 pouces) et 3,2 mm (0,125 pouces) après un seul passage.

6. Méthode selon la revendication 4 ou 5, caractérisée en ce que le dépôt formant le cordon a une largeur de 0,51 mm (0,020 pouces) à 3,2 mm (0,125 pouces).

7. Méthode selon l'une des revendications 4, 5 ou 6, caractérisée en ce que le dépôt formant le cordon a une largeur comparée à la largeur de la surface étroite de la pièce située dans la gamme allant de 1:1 à 2:1.

8. Méthode selon l'une quelconque des revendications 4, 5 ou 6, caractérisée en ce que le dépôt formant le cordon présente un rapport hauteur de cordon/largeur de cordon, situé entre 0,5:1 et 2:1 après un seul passage.

9. Méthode selon la revendication 3, caractérisée en ce que le niveau du courant principal se situe dans la gamme allant de 20 à 70 amp et celui du courant auxiliaire se situe dans la gamme allant de 4 à 15 amp.

10. Méthode selon la revendication 9, caractérisée en outre en ce que le courant principal des impulsions a une durée de 0,3 à 0,6 secondes et le courant auxiliaire des impulsions a une durée de 1 à 1,4 secondes.

11. Méthode selon la revendication 3, caractérisée en outre en ce que le niveau du courant auxiliaire est à 1 amp.

12. Méthode selon la revendication 1, caractérisée en outre en ce que le niveau du courant principal est pulsé avec une durée de 0,1 secondes ou moins et le niveau du courant auxiliaire est pulsé avec une durée de 3 secondes ou davantage.

13. Méthode selon l'une des revendications 3 ou 12, caractérisée en outre en ce que la surface étroite ne dépasse pas 3,2 mm.

Fig. 1.

# Fig.2.

# Fig.3.